Europäisches Patentamt

European Patent Office

Office européen des brevets

(11) Publication number: **0 326 016**
**A2**

## EUROPEAN PATENT APPLICATION

(21) Application number: 89100862.5

(51) Int. Cl.⁴: **B29C 45/27**

(22) Date of filing: 19.01.89

(30) Priority: 25.01.88 US 147981

(43) Date of publication of application:
02.08.89 Bulletin 89/31

(84) Designated Contracting States:
AT BE CH DE ES FR GB GR IT LI LU NL SE

(71) Applicant: HUSKY INJECTION MOLDING
SYSTEMS LTD.
500 Queen Street South
CA-Bolton, Ontario L0P 1A0(CA)

(72) Inventor: **Brown, Paul**
**RR2 Orangeville**
**Ontario, L9W 2Y9(CA)**
Inventor: **Bertschi, Rene A.**
**45 Roslin Avenue**
**Toronto Ontario M4N 1Z1(CA)**

(74) Representative: **Weiss, Peter H., Dr. rer. nat.**
**Patentanwalt Dr. Peter H. Weiss**
**Schlachthausstrasse 1**
**D-7700 Singen a.H.(DE)**

(54) Hot runner nozzle.

(57) The present invention relates to a hot runner nozzle formed by a one-piece nozzle substantially surrounded by a heater. The nozzle is formed from a material which is substantially resistant to abrasive plastic materials and is characterized by a relatively low thermal coefficient of expansion. In a preferred embodiment of the present invention, the one-piece nozzle is made of steel. A thermocouple is embedded within the nozzle in close proximity to the tip of the nozzle so as to measure the temperature of the nozzle at the tip and thereby provide improved thermal control and faster response times. The nozzle has particular utility in devices for injection molding plastics.

FIG-2

## HOT RUNNER NOZZLE

### BACKGROUND OF THE INVENTION

The present invention relates to a hot runner nozzle for use in a device for injection molding plastic products.

Hot runner nozzles have been used in injection molding machines to facilitate the transport of molten plastic materials from a source to a mold cavity. The nozzles generally have either a one-piece construction formed from a highly conductive material such as beryllium-copper as shown in U.S. Patent No. 4,378,963 to Schouenberg or a multi-piece construction as shown in Figure 1 herein having a separate tip also formed from a highly conductive material such as beryllium-copper.

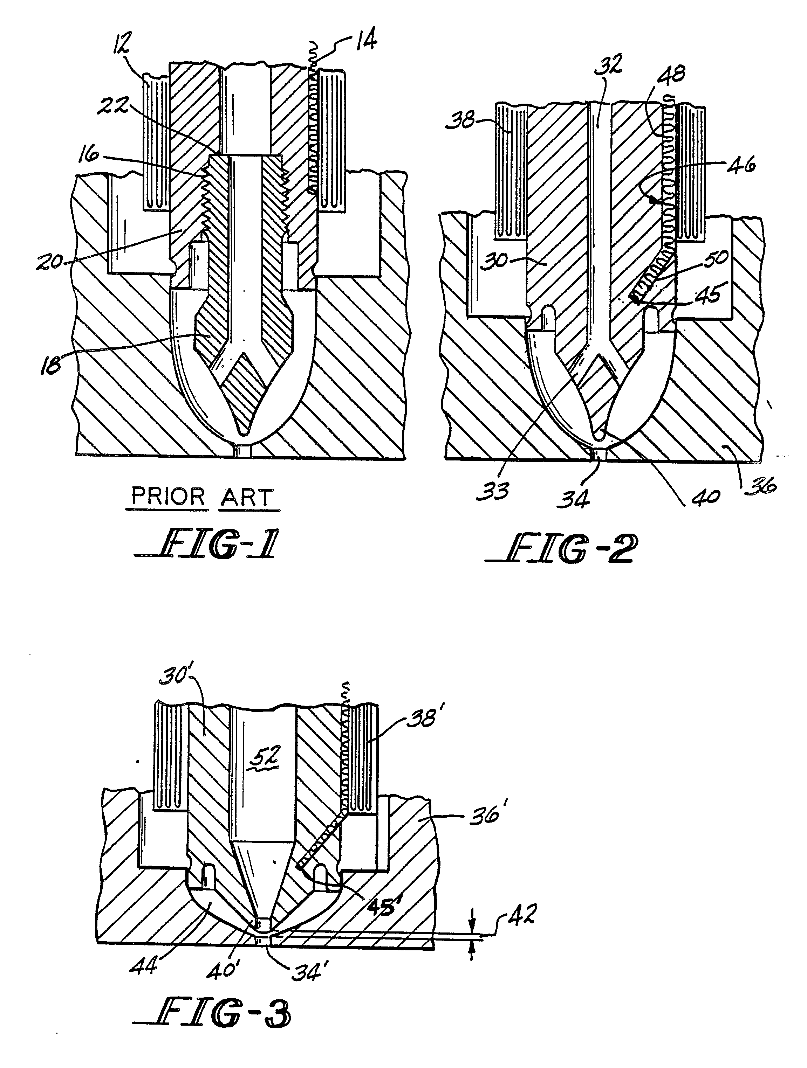

The nozzles typically include a heater, such as heating element 12 in Figure 1, at least partially surrounding the nozzle and a thermocouple, such as thermocouple 14, positioned adjacent the heater. While the thermocouple is intended to measure the temperature of the nozzle, its location causes it to measure only heater temperature. In an attempt to obtain a desired temperature at the tip of the nozzle, the heater is often overdriven resulting in degradation of the plastic material within the nozzle.

Two piece nozzle constructions, such as that shown in Figure 1, have been found to have a lower thermal conductivity of heat to the tip than one-piece constructions. This is due in large part to the heat losses encountered in the thread area 16 where only 10% of the surface of the high thermal conductivity tip 18 contacts the lower thermal conductivity material, for example steel, forming the housing 20. It is also due to the relatively small seating diameter 22 at the junction between the tip and the nozzle housing.

When corrosive or abrasive plastics are to be used, the distribution channel in nozzle tips or nozzles formed from a high thermal conductivity material, such as beryllium-copper, has to be covered with a protective surface layer. This makes the nozzle and/or nozzle tip more expensive to produce because great care must be taken to insure that the protective layer is applied uniformly to all exposed surfaces.

Accordingly, it is an object of the present invention to provide a hot runner nozzle which provide improved thermal control.

It is a further object of the present invention to provide a hot runner nozzle as above having improved resistance to abrasive plastic materials.

It is a yet further object of the present invention to provide a hot runner nozzle as above which is relatively inexpensive to manufacture and which is relatively simple in construction.

These and other objects and advantages will become more apparent from the following description and drawings wherein like reference numerals depict like elements.

### SUMMARY OF THE INVENTION

In accordance with the present invention, the foregoing objects and advantages are achieved by a hot runner nozzle suitable for use in a device for injection molding plastic. The hot runner nozzle is formed by a one-piece nozzle substantially surrounded by a heater. The nozzle is formed from a material which is substantially resistant to abrasive plastic materials and is characterized by a relatively low thermal coefficient of expansion. In a preferred embodiment of the present invention, the one-piece nozzle is made of steel. A thermocouple is embedded within the nozzle in close proximity to the tip of the nozzle so as to measure the temperature of the nozzle at the tip and thereby provide improved thermal control and faster response times.

It has been found that nozzles produced in accordance with the present invention are cheaper to produce because the costs associated with having a separate tip and with using expensive materials, such as beryllium-copper, have been eliminated. In addition, the nozzles of the present invention conduct heat to the tip of the nozzle in a more efficient manner eliminating degradation of the plastic material within the nozzle and providing faster response times.

### BRIEF DESCRIPTION OF THE DRAWINGS

Figure 1 is a cross-sectional view of a known multi-piece hot runner nozzle;

Figure 2 is a cross-sectional view of a hot runner nozzle in accordance with the present invention; and

Figure 3 is a cross-sectional view of an alternative embodiment of a hot runner nozzle in accordance with the present invention.

### DETAILED DESCRIPTION

A hot runner nozzle 30 for use in a device for injection molding plastic materials such as plastic resins is illustrated in Figure 2. The nozzle 30 may be used in a wide variety of devices such as the injection molding machine shown in U.S. Patent No. 4,588,367 to Schad.

The nozzle 30 has a central distribution channel 32 and bifurcated outlet 33 for supplying plastic material to an opening or gate 34 in a plate 36 forming part of a mold. A heater 38 substantially surrounds the nozzle 30 to ensure that the nozzle temperature maintains the molten condition of the plastic material flowing through the nozzle.

Unlike the nozzle shown in Figure 1, the nozzle 30 of the present invention has a one-piece construction. It has been found that this type of nozzle construction is quite advantageous because there is better thermal conductivity of heat to the tip 40 of the nozzle. This improved heat conductivity helps to substantially eliminate degradation of the plastic material within the nozzle and provides a faster response in adjusting nozzle temperature to a desired temperature as well as improved thermal control. As previously discussed, nozzles, such as that shown in Figure 1, having a separate tip 18 suffer from great heat losses in the threaded area joining the tip to the nozzle housing 20 in contact with the heater 12. Additional heat losses occur in these designs because of the relatively small seating diameter of the nozzle housing. One-piece nozzle construction are also desirable from an economic standpoint because of the elimination of the separate tip and the expenses associated therewith.

In a preferred embodiment of the present invention, the nozzle 30 is formed from steel because of the number of significant advantages attendant to its use. For example, nozzles formed from materials such as beryllium-copper have to be coated with a protective layer to resist attack from abrasive resins. Nozzles formed from steel do not require such a protective layer because of steel's inherent resistance to attach from such resins. Nozzles formed from steel are cheaper to manufacture because of the reduced material cost. Still further, steel has a relatively low thermal coefficient of expansion. In some situations, such as that shown in Figure 3, where the tip 40′ of the nozzle comes into contact with a plate 36′ forming part of a mold, a gap 42 develops between the tip 40′ and the plate 36′. As a result of this, plastic material can flow into and out of the bubble 44 between the mold plate 36′ and the tip 40′. Since plastic material within the bubble frequently degrades, it can adversely affect the condition of the melt stream entering the gate 34′ from the nozzle as well as product quality if permitted to flow in relatively significant amounts through the gap 42 into the melt stream. The relatively low thermal coefficient of expansion of steel helps keep the gap 42 very small and substantially prevents resin in the bubble from being drawn out into the melt stream and passing through the opening of gate 34′.

A thermocouple 45 is provided as part of a system for controlling the temperature in the nozzle via adjustment of the heater 38. Unlike many systems where the thermocouple is positioned adjacent the heater, the thermocouple 45 is embedded within the nozzle 30 in close proximity to the nozzle tip 40 and remote from the heater 38. It has been found that positioning the thermocouple in such a location provides a more accurate reading of the temperature at the nozzle tip and improved thermal control. Systems in which the thermocouple is positioned adjacent the heater measure heater temperature rather than nozzle temperature. Attempts to obtain a desired temperature at the nozzle tip often result in the heater being overdriven, causing degradation of plastic material within the nozzle.

The thermocouple 45 may comprise any suitable thermocouple known in the art. A suitable bore 46 having a first portion 48 and an angled portion 50 may be formed in the nozzle to house the thermocouple 45 and any associated wiring.

Figure 3 illustrates another embodiment of a nozzle 30′ in accordance with the present invention. As before, the nozzle is substantially surrounded by a heater 38′ and has a thermocouple 45′ embedded therein. In this embodiment, however, the nozzle 30′ has a straight through flow channel 52.

It is apparent that there has been provided in accordance with this invention a hot runner nozzle which fully satisfies the objects, means, and advantages set forth hereinbefore. While the invention has been described in combination with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims.

## Claims

1. A hot runner nozzle for use in a device for injection molding plastic which comprises:
a nozzle (30, 30′) substantially surrounded by a heater (38, 38′); and said nozzle (30, 30′) having a one-piece construction so as to improve the thermal conductivity characteristics of the nozzle (30, 30′) and being formed from a material substantially resistant to abrasive plastic materials.

2. A hot runner nozzle as in claim 1 wherein said nozzle material has a relatively low thermal coefficient of expansion so as to minimize the size of any gap (42) created between the nozzle (30') and a portion (36') of a mold and thereby reduce the likelihood of plastic material within a bubble (44) between said nozzle (30') and said mold portion (36') degrading and adversely affecting product quality.

3. A hot runner nozzle as in claim 1 or 2 wherein said nozzle material comprise steel that is resitant to abrasive resins.

4. A hot runner nozzle as in one of claims1 to 3 which further comprises mean for measuring the temperature of the nozzle at its tip.

5. A hot runner nozzle as in claim 4 wherein: said measuring means comprises a thermocouple (45, 45') embedded within said nozzle (30, 30'); and said thermocouple (45, 45') being positioned in a location in close proximity to the tip (40, 40') and remote from said heater (38, 38').

6. A hot runner nozzle as in at least one of claims 1 to 5 which further comprises a straight through channel (52) in said nozzle (30') for supplying molten plastic material to an opening (34') in a mold plate (36').

7. A hot runner nozzle as in at least one of claims 1 to 5 wherein: said nozzle (30) has a central channel (32) and a bifurcated outlet (33) communicating with said central channel (32) for supplying molten plastic material to an opening (34) in a mold plate (36).

PRIOR ART

FIG-1

FIG-2

FIG-3